# EUROPEAN PATENT SPECIFICATION

(11) **EP 2 507 011 B1**
(45) Date of publication and mention of the grant of the patent: **16.04.2014**
(21) Application number: 10788394.4
(22) Date of filing: 06.12.2010
(51) Int. Cl.: B24C 3/02, B24C 9/00, B24C 3/06

(54) **ABRASIVE BLASTING**
SCHLEIFSTRAHLEN
DÉCAPAGE PAR PROJECTION D'ABRASIF

(30) Priority: 04.12.2009 GB 0921375
(43) Date of publication of application: 10.10.2012
(73) Proprietor: Pinovo AS, 5828 Bergen (NO)
(72) Inventor: AADLAND, Harald, N-5244 Fana (NO); VEGLO, Geir Arne, N-5244 Fana (NO)
(74) Representative: Samuels, Adrian James
(86) International application number: PCT/GB2010/052031
(87) International publication number: WO 2011/067614

(56) References cited:
- WO-A1-2009/051489
- DE-A1- 2 506 740
- DE-A1- 3 736 885
- DE-A1- 19 512 435
- DE-A1- 19 711 040
- GB-A- 2 204 783
- JP-A- 2007 308 770
- US-A- 2 723 498
- US-A- 5 309 683

## Description

This invention relates to improvements in and relating to abrasive blasting apparatus, methods of abrasive blasting of surfaces and metallic structures treated with such methods.

Abrasive blasting with grit carried by a pressurized gas flow is a widely used technique for cleaning solid surfaces, particularly ceramic or metal surfaces such as pipes or walls, for example to remove rust, paint or dirt prior to painting or welding. Examples of known abrasive blasting apparatus are described for example in WO 2009/051489, US-A-4333277 and US-A-2723498.

To reduce release of dust from abrasive blasting equipment, both to reduce environmental pollution and for the health of the operator, it is normal for the blasting nozzle to be in a chamber, for example one surrounding a pipe to be cleaned or one closed by the surface being cleaned (the work-piece surface) and for grit and dirt to be removed from the chamber under suction. The application of suction to the blasting chamber may serve not just to remove the grit and dirt but also to hold the blasting equipment in contact with the work-piece surface.

Abrasive blasting is generally effected with sand as the abrasive grit, not least because it is inexpensive and readily available. This however generates a large quantity of waste, i.e. spent abrasive grit, paint, rust and dirt fragments, which poses significant problems for safe disposal, especially where the surfaces being cleaned are offshore, for example on an oil/gas platform.

We have found that by the use of a blasting nozzle directed at a slant to the surface to be cleaned and of a ceramic or metallic rebound plate disposed to rebound grit ricocheting from the surface back onto the surface, several beneficial results are achieved: since the rebounded particles contribute to the cleaning effect, i.e. their kinetic energy is not wasted, cleaning is effected more efficiently; the dispersed initial and rebound impacts of the grit on the work-piece surface produces a smooth "feathering" between cleaned and uncleaned surfaces which is particularly desirable if only part of the surface is to be cleaned; and a high standard of surface cleaning is achieved. Moreover, if alumina rather than sand is used as the blasting grit a smaller quantity of waste is produced which reduces disposal problems. Additionally, the use of alumina as the blasting grit in such a technique appears to create a protective surface on cleaned surfaces, especially cleaned ferrous metal surfaces.

Document DE 19711040 discloses an abrasive blasting apparatus and method according to the preambles of claims 1 and 13.

Thus, viewed from one aspect the invention provides an abrasive blasting apparatus comprising a housing engageable with a surface to be blasted to form a blasting chamber, said housing containing a blast nozzle and a metallic or ceramic rebound plate and being provided with a suction extraction port, said blast nozzle preferably being disposed such that the grit flow axis therefrom is non-perpendicular to a said surface engaged with said housing, and said rebound plate being disposed to bounce grit from said blast nozzle rebounding from said surface back onto said surface, characterised in that the rebound plate is removable.

Viewed from a further aspect the invention provides a method of abrasive blasting cleaning of a surface, said method comprising directing a flow of abrasive grit containing compressed gas at a said surface, preferably along a flow axis non-perpendicular to said surface, and, using a metallic or ceramic rebound plate disposed adjacent said surface, causing grit from said flow rebounding from said surface to be bounced back onto said surface, characterised in that the rebound plate is removable.

The rebound plate may be of ceramic or of any convenient metal, for example steel or titanium. However it is preferably of aluminium for a variety of reasons: firstly, aluminium has a low density and thus the inclusion of an aluminium rebound plate does not add significantly to the weight of the apparatus, which may be intended to be carried by a human operator; secondly, aluminium is relatively soft and its use reduces fragmentation of the blasting grit, thus prolonging its useable life; and, thirdly, aluminium is relatively inexpensive allowing the rebound plate to be replaced relatively cheaply on becoming worn. If desired the grit impact surface of the rebound plate may be coated with a wear-resistant material, e.g. a plastics or rubber coating, to prolong its operating life. Alternatively the whole of the rebound plate could comprise the wear-resistant material, e.g. rubber.

The rebound plate may be flat, angled or curved. Typically for blasting apparatus for use for cleaning pipes it will have or will be part of a generally frusto-conical form. For blasting apparatus for use for cleaning generally flat surfaces, the rebound plate will generally be flat or have a generally flat central portion. The up and downstream ends of the rebound plate, i.e. the ends proximal and distal to the blast nozzle, may be curved towards, or more preferably away from the work-piece surface. The rebound plate will preferably be mounted at an angle of up to 45°, preferably 5 to 30°, especially about 15° relative to the surface to be cleaned (i.e. in the plane of the grit flow direction). The minimum clearance of the rebound plate from the work-piece surface will preferably be 1 to 40 mm, especially 10 to 30 mm, particularly about 20 mm.

Where the housing containing the rebound plate is flexible to allow for cleaning non-planar surfaces or pipe bends, the rebound plate may be in a plurality of individually mounted segments (e.g. a set of frusto-conical sections). Alternatively or additionally the rebound plate may be mounted via a flexible support, e.g. springs or rubber legs.

The length of the rebound plate in the grit flow direction is preferably such as to allow grit particles to be reflected off it and back onto the work-piece surface one to five times, especially 2 or 3 times.

As mentioned earlier, the rebound plate is dismountable from the housing to allow easy replacement when worn. The rebound plate, especially in apparatus intended to be carried by the operator during use, may also be mounted to allow its movement between an open position in which blasting of the work-piece surface is possible and a closed position in which it is disposed in the grit flow path from the blast nozzle. In this embodiment, the housing is preferably formed to create a blasting chamber and a suction chamber separated by the rebound plate when in the open position and not separated in the closed position. The rebound plate may conveniently be provided with an actuation mechanism to move the rebound plate from the closed to the open position.

In one set of embodiments the actuation mechanism could comprise an actuating part adapted to contact the work-piece surface and to move the end plate to the open position upon such contact. The actuating part could, for example, comprise an extension (e.g. a leg) on the rebound plate disposed towards the work-piece surface whereby contacting the surface with the apparatus causes the leg to automatically move the rebound plate from the closed to the open positions. In this way environmental release of grit may be avoided and operator safety increased.

In another set of embodiments the actuating mechanism is operable by a user. It could, for example comprise a lever coupled to or attached to the end plate.
Preferably the lever is arranged such that it must be pushed towards the work-piece in order to open it. This makes the action required to bring the head unit down onto a work-piece and open the end plate a natural and continuous one which alleviates strain on the operator. It also allows the apparatus to be configured so that the end plate is difficult or impossible to open until the head unit is resting against the work-piece and thereby giving the operator something to push against. Having an external, user-operated actuating mechanism may allow the apparatus to be more compact and therefore more suitable to be used for small and/or awkwardly shaped surfaces.

Preferably the rebound plate is biased towards the closed position, e.g. by a spring or other resiliently deformable closure device.

In apparatus where the rebound plate is movable between open and closed positions, since in the closed position the rebound plate may be exposed to direct impact by grit from the blast nozzle, it may be desirable to form the rebound plate with different materials on its inner and outer surfaces, e.g. aluminium on the outer, rebound surface for the reasons specified above, and a harder material such as ceramic, steel or titanium on the inner surface to reduce wear if grit spraying occurs while the plate is in the closed position. The rebound plate is removable to allow replacement as the aluminium surface becomes worn.

In one set of embodiments the housing comprises a rim which contacts the surface to be cleaned. The work-piece contacting rim of the housing is preferably resiliently deformable to allow a relatively dust-proof seal during operation of the blasting apparatus.

The downstream work-piece contacting rim of the housing is preferably inwardly curved or provided with an inner, inwardly curved skirt. In this way, especially when the downstream end of the rebound plate is curved away from the work-piece surface, suction removal of grit and dust from the work-piece surface is facilitated. Such suction removal is further facilitated by disposing an airfoil section between the rim of the housing and the downstream end of the rebound plate. This airfoil section will again preferably be of aluminium and readily dismountable.

The grit flow axis from the blast nozzle is preferably at 20 to 70°, especially 30 to 60°, particularly about 45°, relative to the work-piece surface in the grit flow direction. Preferably the blast nozzle is movable, e.g. rockable, to allow a larger area of the work-piece surface to be blasted when the housing is in any one location on the work-piece surface. Such an arrangement is described in WO 2009/051489 for example. If desired however the grit flow axis may be up to 90° (i.e. perpendicular) to the work-piece surface - in this arrangement the apparatus is preferably provided with a rebound plate to either side of the grit flow axis, e.g. two or more plates or a planar or frustroconical rebound plate with an aperture through which the grit flow axis passes.

In one set of embodiments the housing comprises multiple blast nozzles. This allows a larger area of the work-piece surface to be blasted when the housing is in any one location on the work-piece surface and can be provided as an alternative or in addition to the blast nozzle being movable, e.g. the housing could comprise multiple movable blast nozzles. In one set of embodiments the housing comprises up to 32 blast nozzles, e.g. up to 8 blast nozzles, e.g. 2 or 4 blast nozzles.

The grit sprays from the blast nozzle will generally diverge. Preferably their divergence is by a cone angle of up to 20°, particularly up to 10°, more especially about 5°. A divergent spray results in a more complete cleaning of the work-piece surface and a more favourable feathering of the border between cleaned and uncleaned surface on the work-piece.

Besides the components discussed above, the apparatus of the invention will preferably also include other components conventional in abrasive blasting apparatus, e.g. a suction pump, a dust-from-grit separator, a grit reservoir, a compressor and the like. Where the apparatus is to be portable it will generally have the housing on a handle equipped with a trigger to start blasting. Where the apparatus is not to be portable it will preferably have means for attachment to the work-piece surface, e.g. clamps or grippers, and optionally a tractor to move it over the work-piece surface, preferably in the grit flow direction. Thus, viewed from a further aspect the invention provides an abrasive blasting system comprising abrasive blasting apparatus according to the invention, a gas compressor, a grit reservoir, a grit separator, a dust separator, and a suction pump.

While any convenient blasting grit, e.g. sand or metal particles, may be used, as mentioned earlier, the use of alumina as the blasting grit is especially preferred. Alumina grit may be obtained commercially from Clemco and generally has a mode particle size of about 500 to 2000µm. This can be reused repeatedly until the particles are reduced to dust and are separated out with the paint, dirt and rust removed in the dust-from-grit separator, conveniently a cyclone separator. The cutoff size for recycling or removal as dust will generally be in the range 100-300 micrometers, especially about 200 micrometers. In place of alumina other metal oxides such as zirconia and titania may be used.

The recycling of the grit means that, unlike in conventional abrasive blasting, a wide range of grit particle size is used thus increasing the rate of particle impacts per unit surface area and enabling smaller surface imperfections to be cleaned.

Where alumina is used with a rebounded abrasive blasting technique, e.g. according to the invention, we have surprisingly found that the corrosion resistance of treated surfaces, especially treated ferrous metal surfaces, is enhanced. Thus, viewed from a further aspect the invention provides objects having a surface e.g. a ferrous metal surface, cleaned by abrasive blasting with alumina grit in which said grit is rebounded onto the object surface. Objects in this regard will typically be tubes, bars or panels.

Embodiments of the invention will now be described further with reference to the accompanying drawings in which:
Figure 1 is a schematic cross-sectional side view of apparatus according to the invention for grit blasting pipes;
Figure 2 is a schematic cross-sectional side view of apparatus according to the invention for grit blasting surfaces;
Figure 3 is a schematic illustration of the operating components of an apparatus according to the invention; and
Figures 4a and 4b are schematic cross-sectional side views of a portable apparatus according to the invention.

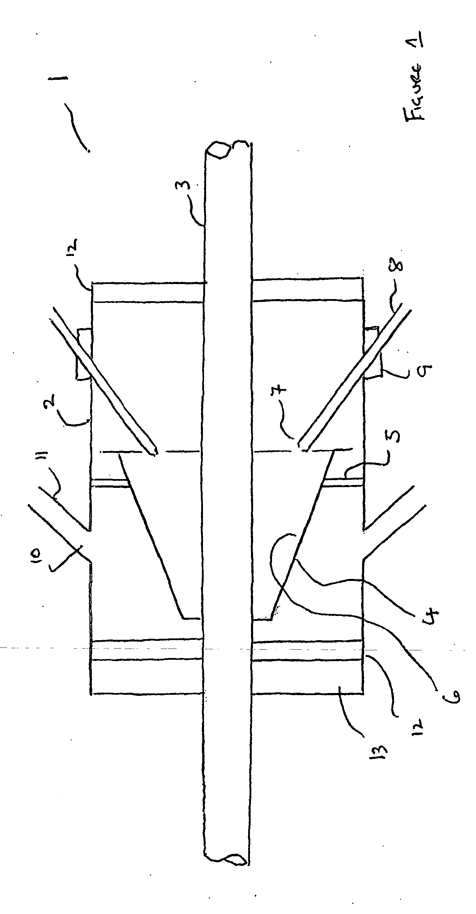

Referring to Figure 1 there is shown an abrasive blasting apparatus 1 having two half-cylindrical housing members 2 disposed around a pipe 3 and held together by clamps (not shown).

Inside each housing member is disposed an aluminium rebound plate 4 removably screw-mounted on legs 5 to the inner wall of the housing member. Together the rebound plates provide a frusto-conical rebound surface 6. Each housing member is provided with one or more, preferably 2, 3 or 4 or more, blast nozzles 7 connected by hoses 8 to a source of compressed air and blasting grit. The blast nozzles are held by mountings 9 provided with motors (not shown) arranged to cause the nozzle direction to vary to increase the surface area of the pipe impacted with grit from the nozzles. The housing members are also provided with suction ports 10 linked by hoses 11 to a dirt-from-grit separator, a dirt collector and a suction pump (all not shown).

At the front and rear ends, the housing members are provided with self-centring clamps 12 to hold the housing in place during operation. At the front end is provided a tractor 13 to move the housing along the pipe in stepwise fashion.

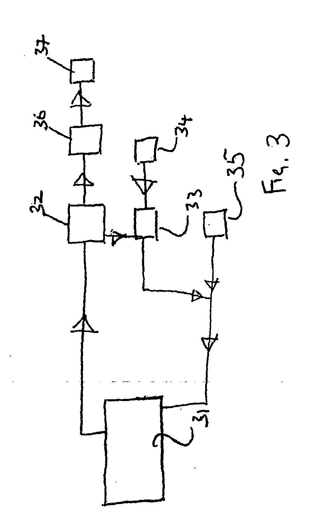

In operation, grit is sprayed through the blast nozzles onto the surface of the pipe. Rebounding from the pipe the grit strikes and rebounds from the rebound plate to strike the pipe surface again. After several rebounds the kinetic energy of the grit is lost and it and dust is sucked out of the housing through the suction ports. As shown schematically in Figure 3, grit and dust leaving the blast chamber 31 pass to a cyclone separator 32 from which grit of sufficient size to be reused is recycled into grit reservoir 33 to mix with fresh grit from grit source 34 and then be blown back to the blast nozzle, by compressed air from an air compressor 35.

Dust from separator 32 passes to a filter unit 36 from where it is periodically removed. Air from filter unit 36 passes through suction pump 37 and is discharged.

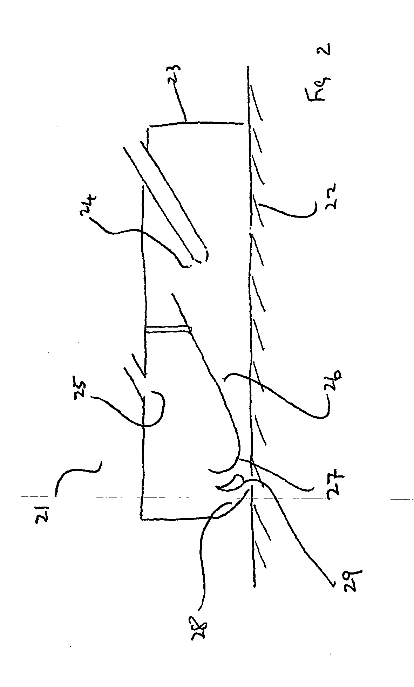

In Figure 2 there is shown an alternative blasting apparatus 21 for the treatment of a planar surface 22. The apparatus comprises an open-sided box shaped housing 23 provided with blast nozzles 24 and suction ports 25 as in the device of figure 1 which are similarly connected to the other apparatus components shown schematically in figure 3.

Removably attached to the inner wall of housing 23 is a planar rebound plate 26 having a curved downstream end 27. The wall 28 of housing 23 adjacent this curved end of the rebound plate is curved inwards and between the two curved surfaces is disposed an aerofoil shaped member 29 which enhances the uplift of dust and other particles from the planar surface being treated and out through the suction port 25.

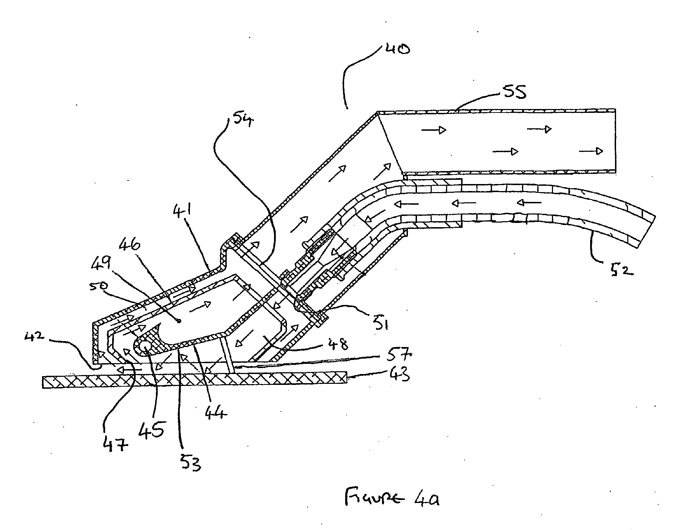

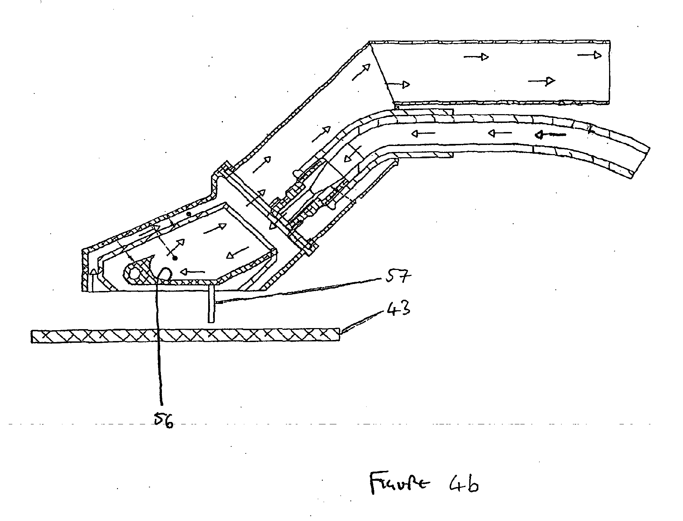

Referring to Figures 4a and 4b there is shown a portable blasting apparatus 40 useful for cleaning planar or curved surfaces. The apparatus comprises a housing member 41 having a rim 42 defining an open, surface-engaging face. The rim is shaped according to the shape of the surfaces to be cleaned. In the embodiment shown, the surface 43 to be cleaned is planar.

Within the housing is disposed a rebound plate 44 pivotably mounted on axle 45 and movable between an open position (shown in Figure 4a) and a closed position (shown in Figure 4b). The rebound plate is preferably biased to the closed position by a spring (not shown).

Also within the housing is preferably mounted a flow defining tube 46 having an open end adjacent the surface to be treated and having a rim 47 similarly shaped to that of the open end of the housing. With the rebound plate in the open position, the rebound plate and the flow tube define a blast chamber 48 and a suction chamber 49. A further suction chamber 50 is defined between the housing and the flow tube.

A blast nozzle 51, provided with a supply hose 52 is arranged to direct a spray of grit towards the surface of the work-piece being treated. With the rebound plate in the open position, this spray will strike the surface, rebound against the lower face 53 of the rebound plate and re-strike the surface. Dust and grit from the surface passes through the suction chambers and out of the housing through suction port 54 and hose 55.

When the rebound plate is in the closed position, any grit from nozzle 51 will strike the upper surface 56 of the rebound plate and be removed through the suction port without striking the work-piece surface.

The rebound plate is spring biased into the closed position and is pushed into the open position when leg 57, attached to the rebound plate, is pushed against the surface of the work-piece. Alternatively an external handle could be provided to move the rebound plate into the open position.

The outer suction chamber 50 serves to pull the housing into contact with and maintain that contact with the work-piece surface.

Once again the apparatus of Figures 4a and 4b will generally operate in conjunction with the other apparatus components shown schematically in Figure 3. The operator will generally be provided with a triggered handle for holding the housing.

## Claims

1. An abrasive blasting apparatus (21) comprising a housing (23) engageable with a surface (22) to be blasted to form a blasting chamber, said housing (23) containing a blast nozzle (24) and a metallic or ceramic rebound plate (26) and being provided with a suction extraction port (25), said blast nozzle (24) preferably being disposed such that the grit flow axis therefrom is non-perpendicular to said surface (22) engaged with said housing (23), and said rebound plate (26) being disposed to bounce grit from said blast nozzle (24) rebounding from said surface (22) back onto said surface (22), **characterised in that** the rebound plate (26) is removable.

2. An apparatus as claimed in claim 1, wherein the rebound plate (26) comprises aluminium.

3. An apparatus as claimed in claim 1 or 2, wherein the grit impact surface of the rebound plate (26) is coated with a wear-resistant material.

4. An apparatus as claimed in claim 1, 2 or 3, wherein the rebound plate (26) is mounted at an angle of up to 45°, preferably between 5 and 30°, e.g. about 15° relative to the surface (22) to be cleaned.

5. An apparatus as claimed in any preceding claim, wherein the minimum clearance of the rebound plate (26) from the surface to be cleaned is between 1 and 40 mm, preferably between 10 and 30 mm, e.g. about 20 mm.

6. An apparatus as claimed in any preceding claim, wherein the housing (23) comprises a resiliently deformable rim.

7. An apparatus as claimed in any preceding claim, wherein the downstream contacting rim (28) of the housing is inwardly curved or provided with an inner, inwardly curved skirt.

8. An apparatus as claimed in any preceding claim, wherein the grit flow axis from the blast nozzle (24) is between 20° and 70°, preferably between 30° and 60°, e.g. about 45°, relative to the surface (22) in the grit flow direction.

9. An apparatus as claimed in any preceding claim, wherein the blast nozzle (24) is movable.

10. An apparatus as claimed in any preceding claim, wherein the housing (23) comprises multiple blast nozzles (24).

11. An apparatus as claimed in any preceding claim, wherein the grit sprayed from the blast nozzle (24) diverges.

12. An abrasive blasting system comprising abrasive blasting apparatus (21) as claimed in claim 1, a gas compressor, a grit reservoir, a grit separator, a dust separator, and a suction pump.

13. A method of abrasive blasting cleaning of a surface (22), said method comprising directing a flow of abrasive grit containing compressed gas at a said surface (22) along a flow axis which is preferably non-perpendicular to said surface (22) and, using a metallic or ceramic rebound plate (26) disposed adjacent said surface (22), causing grit from said flow rebounding from said surface (22) to be bounced back onto said surface (22), **characterised in that** the rebound plate (26) is removable.

## Patentansprüche

1. Schleifmittelstrahlvorrichtung (21), die ein Gehäuse (23) umfasst, das einen Eingriff mit einer Oberfläche (22), die bestrahlt werden soll, herstellen kann, um eine Strahlkammer zu bilden, wobei das Gehäuse (23) eine Strahldüse (24) und ein metallisches oder keramisches Prallblech (26) enthält und mit einer Absaugöffnung (25) versehen ist, wobei die Strahldüse (24) vorzugsweise derart angeordnet ist, dass die Achse des Strahlgutstroms derselben zu der Oberfläche (22), die mit dem Gehäuse (23) in Eingriff ist, nicht senkrecht ist, und wobei das Prallblech (26) angeordnet ist, damit das Strahlgut von der Strahldüse (24) von der Oberfläche (22) zurück auf die Oberfläche (22) prallt, **dadurch gekennzeichnet, dass** das Prallblech (26) abnehmbar ist.

2. Vorrichtung nach Anspruch 1, wobei das Prallblech (26) aus Aluminium besteht.

3. Vorrichtung nach Anspruch 1 oder 2, wobei die Aufpralloberfläche des Strahlguts des Prallblechs (26) mit einem verschleißfesten Material beschichtet ist.

4. Vorrichtung nach Anspruch 1, 2 oder 3, wobei das Prallblech (26) unter einem Winkel von bis zu 45°, vorzugsweise zwischen 5 und 30°, z.B. etwa 15° relativ zu der Oberfläche (22), die gereinigt werden soll, befestigt ist.

5. Vorrichtung nach einem vorhergehenden Anspruch, wobei der minimale Abstand des Prallblechs (26) von der Oberfläche (22), die gereinigt werden soll, zwischen 1 und 40 mm, vorzugsweise zwischen 10 und 30 mm, z.B. etwa 20 mm, beträgt.

6. Vorrichtung nach einem vorhergehenden Anspruch, wobei das Gehäuse (23) einen elastischen, verformbaren Rand umfasst.

7. Vorrichtung nach einem vorhergehenden Anspruch, wobei der stromabwärts berührende Rand (28) des Gehäuses nach innen gekrümmt ist oder mit einer inneren, nach innen gekrümmten Einfassung versehen ist.

8. Vorrichtung nach einem vorhergehenden Anspruch, wobei die Achse des Strahlgutstroms von der Strahldüse (24) zwischen 20° und 70°, vorzugsweise zwischen 30° und 60°, z.B. etwa 45°, relativ zu der Oberfläche (22) in der Richtung des Strahlgutstroms ist.

9. Vorrichtung nach einem vorhergehenden Anspruch, wobei die Strahldüse (24) beweglich ist.

10. Vorrichtung nach einem vorhergehenden Anspruch, wobei das Gehäuse (23) mehrfache Strahldüsen (24) umfasst.

11. Vorrichtung nach einem vorhergehenden Anspruch, wobei das Strahlgut, das von der Strahldüse (24) gespritzt wird, divergiert.

12. Schleifmittelstrahlsystem, das eine Schleifmittelstrahlvorrichtung (21) nach Anspruch 1, einen Gaskompressor, einen Behälter für das Strahlgut, einen Strahlgutabscheider, einen Staubabscheider und eine Ansaugpumpe umfasst.

13. Verfahren zum Reinigen einer Oberfläche (22) mittels Schleifmittelstrahlen, wobei das Verfahren ein Lenken eines Stroms eines Schleifmittelstrahlguts, der komprimiertes Gas an der Oberfläche (22) entlang einer Stromachse, die vorzugsweise nicht senkrecht zu der Oberfläche (22) ist, enthält, und ein Verwenden eines metallischen oder keramischen Prallblechs (26), das zu der Oberfläche (22) benachbart angeordnet ist, umfasst, wobei veranlasst wird, dass das Strahlgut von dem Strom, der von der Oberfläche (22) prallt, zurück auf die Oberfläche (22) prallt, **dadurch gekennzeichnet, dass** das Prallblech (26) abnehmbar ist.

## Revendications

1. Appareil de grenaillage (21) comprenant un logement (23) qui est à même de s'engager sur une surface (22) à grenailler pour former une chambre de grenaillage, ledit logement (23) contenant une buse de soufflage (24) et une plaque de rebond métallique ou céramique (26) et étant pourvu d'un orifice d'extraction aspiration (25), ladite buse de soufflage (24) étant de préférence disposée de sorte que l'axe d'écoulement de la grenaille qui en résulte soit non perpendiculaire à ladite surface (22) engagée sur ledit logement (23) et ladite plaque de rebond (26) étant disposée pour faire rebondir la grenaille sortant de ladite buse de soufflage (24) qui rebondit de ladite surface (22) pour retourner sur ladite surface (22), **caractérisé en ce que** la plaque de rebond (26) est amovible.

2. Appareil selon la revendication 1, dans lequel la plaque de rebond (26) comprend de l'aluminium.

3. Appareil selon la revendication 1 ou la revendication 2, dans lequel la surface d'impact de la grenaille de la plaque de rebond (26) est revêtue d'un matériau résistant à l'usure.

4. Appareil selon la revendication 1, 2 ou 3, dans lequel la plaque de rebond (26) est montée sous un angle allant jusqu'à 45°, de préférence entre 5 et 30°, par exemple d'environ 15° par rapport à la surface (22) à nettoyer.

5. Appareil selon l'une quelconque des revendications précédentes, dans lequel le dégagement minimal de la plaque de rebond (26) par rapport à la surface à nettoyer se situe entre 1 et 40 mm, de préférence entre 10 et 30 mm, par exemple d'environ 20 mm.

6. Appareil selon l'une quelconque des revendications précédentes, dans lequel le logement (23) comprend un rebord à déformation élastique.

7. Appareil selon l'une quelconque des revendications précédentes, dans lequel le rebord de contact aval (28) du logement est incurvé vers l'intérieur ou pourvu d'une jupe interne incurvée vers l'intérieur.

8. Appareil selon l'une quelconque des revendications précédentes, dans lequel l'axe d'écoulement de la grenaille par rapport à la buse de soufflage (24) se situe entre 20° et 70°, de préférence entre 30° et 60°, par exemple d'environ 45° par rapport à la surface (22) dans la direction d'écoulement de la grenaille.

9. Appareil selon l'une quelconque des revendications précédentes, dans lequel la buse de soufflage (24) est mobile.

10. Appareil selon l'une quelconque des revendications précédentes, dans lequel le logement (23) comprend de multiples buses de soufflage (24).

11. Appareil selon l'une quelconque des revendications précédentes, dans lequel la grenaille pulvérisée par la buse de soufflage (24) diverge.

12. Système de grenaillage comprenant l'appareil de grenaillage (21) selon la revendication 1, un compresseur de gaz, un réservoir de grenaille, un séparateur de grenaille, un séparateur de poussière et une pompe aspirante.

13. Procédé de nettoyage par grenaillage d'une surface (22), ledit procédé comprenant les étapes consistant à diriger un écoulement de grenaille contenant du gaz comprimé sur ladite surface (22) le long d'un axe d'écoulement de préférence non perpendiculaire à ladite surface (22) et, en utilisant une plaque de rebond métallique ou céramique (26) disposée adjacente à ladite surface (22), amener la grenaille dudit écoulement rebondissant de ladite surface (22) à retourner par rebond sur ladite surface (22), **caractérisé en ce que** la plaque de rebond (26) est amovible.
